# EUROPÄISCHE PATENTANMELDUNG

(11) **EP 1 835 150 A1**
(43) Veröffentlichungstag der Anmeldung: **19.09.2007**
(21) Anmeldenummer: 06005567.0
(22) Anmeldetag: 17.03.2006
(51) Int. Cl.: F02C 9/00, G01N 29/00

(54) **Verfahren zur Inspektion einer Turbinenanlage sowie Vorrichtung hierzu**

(71) Anmelder: SIEMENS AKTIENGESELLSCHAFT, 80333 München (DE)
(72) Erfinder: Ehehalt, Ulrich, 45131 Essen (DE); Fajardo-Reina, Scarlett, 40231 Düsseldorf (DE); Grundei, Daniel, 47226 Duisburg (DE); Harders, Harald, 45468 Mülheim a.d. Ruhr (DE); Krause, Stefan, 45470 Mülheim an der Ruhr (DE); Krompietz, Martin, 45359 Essen (DE); Lüttenberg, Andreas, 45289 Essen (DE); Pels Leusden, Christoph Dr., 90419 Nürnberg (DE); Scheidtmann, Wilhelm, 58644 Iserlohn (DE); Schumann, Eckart Dr., 45468 Mülheim a.d. Ruhr (DE); Tenrahm, Thomas-Dieter, 46535 Dinslaken (DE); Trenaman, Dirk, 47506 Neukirchen-Vluyn (DE)

(57) **Zusammenfassung**

Es wird ein Verfahren zur Inspektion einer Gasturbinenanlage oder Dampfturbinenanlage vorgestellt, bei dem ein Ist-Zustand einer Komponente der Turbinenanlage mit Hilfe eines geeigneten Mittels ermittelt wird, der ermittelte Ist-Zustand mit einem vorgegebenen Soll-Zustand der Komponente verglichen wird, und auf Basis des Vergleichs zwischen dem Ist-Zustand und dem Soll-Zustand abgeleitet wird, ob eine Gesamtinspektion der Turbinenanlage erforderlich ist. Ferner wird ein Turbinen-Inspektionssystem zur Durchführung des obigen Verfahrens präsentiert.

## Beschreibung

Die Erfindung betrifft ein Verfahren zur Inspektion von Energiewandlungsmaschinen, insbesondere einer Gasturbinenanlage oder einer Dampfturbinenanlage. Die Erfindung betrifft ferner ein Inspektionssystem für eine Turbinenanlage zur Durchführung des erfindungsgemäßen Verfahrens.

Gegenwärtig werden Turbinenanlagen aufgrund einer für die gesamte Turbine gültigen, empirischen Größe einer Gesamtinspektion unterzogen, bei der in der Regel die gesamte Turbinenanlage heruntergefahren wird. Während dieser Stillstandszeiten werden kritische Komponenten der Turbinenanlage, beispielsweise die Leit- und Laufschaufeln oder Brennkammerauskleidungen genauer untersucht, um festzustellen, ob der Zustand der Komponenten einen weiteren Einsatz dieser Komponenten im Turbinenanlagen-Betrieb zulässt oder gegebenenfalls ein Austausch bzw. eine Überholung der Komponenten erforderlich ist, um Störfällen während des Betriebs der Turbinenanlage vorzubeugen.

Als maßgebliche Größe der Festlegung der Wartungsstillstände kann beispielsweise eine effektive Betriebsdauer (Abk.: EOH) dienen, die mittels empirischer Formeln berechnet wird. Folgende Eingangsgrößen sind denkbar: die Betriebsstunden der Turbinenanlage(Abk.: OH), so genannte dynamische Stunden (Abk.: Dyn H), also die Betriebsstunden, während denen die Turbinenanlage großen Betriebszustandsänderungen ausgesetzt wird (die mit großen Belastungsänderungen, insbesondere thermischen Belastungsänderungen an den Komponenten der Turbinenanlage verbunden sind), und die Anzahl der Turbinenstarts einfließen.

Üblich ist es, eine Inspektion einer Turbinenanlage nach Ablauf einer festgelegten Zahl effektiver Betriebsstunden vorzunehmen.

Bei diesem bekannten Inspektionsverfahren bleibt jedoch der Einfluss der tatsächlichen Last, der eingestellten Turbineneintrittstemperatur und des verwendeten Brennstoffs unberücksichtigt. Ferner wird insbesondere auch kein komponentenspezifischer Befundfortschritt, etwa in Form eines Risswachstums betrachtet. Meist werden die Komponenten der Turbinenanlage nur begutachtet und auf Basis der vorgenommenen Inspektion keine Maßnahmen für eine eventuelle Reparatur abgeleitet. Die einzigen Komponenten, die im Rahmen von Inspektionen getauscht werden können und auch getauscht werden sind keramische und metallische Hitzeschilde, wobei der Austausch von keramischen Hitzeschilden gegebenenfalls mittels eines empirisch festgelegten Risslängenkriteriums nach visueller Begutachtung erfolgt und hierbei die Lebensdauer der Hitzeschilde meist nicht völlig ausgeschöpft wird.

Insgesamt betrachtet ist daher zunächst festzuhalten, dass bei bekannten Inspektionsverfahren die Lebensdauer der Komponenten von Turbinenanlagen oft nicht optimal ausgeschöpft wird. Ferner erfolgt eine Begutachtung der Komponenten ausschließlich während der für die Gesamtinspektion vorgesehenen Stillstandzeiten, so dass eventuell kritisch geschädigte Komponenten möglicherweise nicht früh genug identifiziert werden, womit ein nicht zu vernachlässigendes Risiko während des Betriebs der Turbinenanlage verbunden ist.

Der Erfindung liegt die Aufgabe zugrunde, ein Verfahren zur Inspektion einer Turbinenanlage anzugeben, mit dem die Lebensdauer, insbesondere kritischer Komponenten der Turbinenanlage optimal und ohne Risiko ausgeschöpft werden kann.

Diese Aufgabe ist erfindungsgemäß mit dem eingangs genannten Verfahren zur Inspektion einer Turbinenanlage, insbesondere einer Gasturbinenanlage oder Dampfturbinenanlage gelöst, bei dem ein Ist-Zustand einer Komponente der Turbinenanlage mit Hilfe eines geeigneten Mittels ermittelt wird, der ermittelte Ist-Zustand mit einem vorgegebenen Soll-Zustand der Komponente verglichen wird, und auf Basis des Vergleichs zwischen dem Ist-Zustand und dem Soll-Zustand abgeleitet wird, ob eine Gesamtinspektion der Turbinenanlage erforderlich ist.

Durch Verwendung geeigneter Mittel, vorzugsweise in Form technischer Messmittel, die für die Ermittlung der Ist-Zustände insbesondere kritischer Komponenten der Turbinenanlage vorgesehen sind, kann auch während des laufenden Turbinenbetriebs der Ist-Zustand der Komponenten ermittelt werden. Unter dem Ist-Zustand einer Komponente ist hierbei vorzugsweise jedes technische Merkmal einer Komponente (beispielsweise die Oberflächenbeschaffenheit einer Leitschaufel) zu verstehen, dass die Einsatztauglichkeit und die Lebensdauer der Komponente beeinflusst.
Der ermittelte Ist-Zustand der jeweiligen Komponente kann dann jederzeit während des laufenden Turbinenbetriebs mit einem vorgegebenen Soll-Zustand verglichen werden. Auf Basis dieses erfindungsgemäßen Vergleichs zwischen dem Ist-Zustand und einem vorgegebenen Soll-Zustand, der einem einsatztauglichen Zustand der betreffenden Komponente der Turbinenanlage entspricht, lässt sich dann erfindungsgemäß ableiten, ob eine Gesamtinspektion der Turbinenanlage erforderlich ist, bei der die Turbinenanlage in der Regel heruntergefahren wird.

Im Rahmen der Gesamtinspektion können dann die betreffenden Komponenten und weitere kritische Komponenten nochmals eingehender auf ihre Einsatztauglichkeit hin untersucht werden. Hierbei kann es unter Umständen erforderlich sein, entsprechende Komponenten auszutauschen oder eine geeignete Reparatur vorzunehmen.

Insgesamt betrachtet ermöglicht das erfindungsgemäße Verfahren eine risikolose optimale Ausschöpfung der Lebensdauern kritischer Komponenten einer Turbinenanlage. So kann die Verfügbarkeit der Turbinenanlage erhöht werden. Die gilt vor allem für Turbinenanlagen, die eine schonende Betriebsweise erfahren und gemäß den oben dargelegten, aus dem Stand der Technik bekannten empirischen Formeln zur Berechnung von effektiven Betriebsdauern, öfters einer Gesamtinspektion unterzogen werden müssten als technisch erforderlich. Erfindungsgemäß können daher pro Jahr mehrere Stillstandstage eingespart werden.

Bei einer vorteilhaften Weiterbildung des erfindungsgemäßen Verfahrens ist eine der Komponenten der Turbinenanlage ein Filter, der zu ermittelnde Ist-Zustand der Verschmutzungszustand des Filters, und das Mittel eine Druckmesseinrichtung, wobei zur Ermittlung des Verschmutzungszustands des Filters der Druckabfall über dem Filter, welcher sich bei Durchströmung des Filters einstellt, mittels der Druckmesseinrichtung gemessen wird.

Bei einem konkreten Anwendungsfall handelt es sich bei dem Filter vorzugsweise um einen Ansaugfilter in einem Ansaughaus des Verdichters einer Turbinenanlage. Der Verschmutzungszustand steht unmittelbar mit dem Druckabfall über dem Filter in bekannter Weise in Zusammenhang, und lässt sich daher erfindungsgemäß während des laufenden Turbinenbetriebs quantifizieren. Die Messung des Druckabfalls erfolgt mittels einer üblichen Druckmesseinrichtung. Bei dieser praktischen Weiterbildung des erfindungsgemäßen Verfahrens wird der so ermittelte Ist-Zustand mit dem Soll-Zustand in Form eines vorgegeben Wertes oder Wertbereichs für den Druckabfall verglichen. Wird eine nicht mehr tolerierbare Abweichung von der Sollwertvorgabe festgestellt, ist die Turbinenanlage zur Durchführung einer Gesamtinspektion herunterzufahren, bei welcher der Ansaugfilter aus dem Ansaughaus zu entfernen und durch einen neuen oder wieder instand gesetzten Ansaugfilter auszutauschen ist.

Ferner lässt über den durch eine Druckabfallmessung bestimmten Verschmutzungszustand eines externen Filters im Kühlkreislauf einer Turbinenanlage auch auf den Verschmutzungszustand bzw. den Abbrand von Schaufeln schließen.

Bei einer konkreten Ausführungsform des erfindungsgemäßen Verfahrens ist eine der Komponenten der Turbinenanlage eine Schaufel, der zu ermittelnde Ist-Zustand die Materialbeschaffenheit der Schaufel, und das Mittel eine Thermographiemesseinrichtung, wobei zur Ermittlung der Materialbeschaffenheit an der Schaufel eine Thermographiemessung vorgenommen wird, die unter Verwendung der Thermographiemesseinrichtung durchgeführt wird.

Mittels einer Thermographiemessung an den Leitschaufeln und/oder Laufschaufeln der ersten Turbinenstufe kann der Ist-Zustand der Schaufeln in Form ihrer Materialbeschaffenheit ermittelt werden. Eine Thermographiemessung ermöglicht die Erkennung von Schichtabplatzungen, Rissen und Verzunderungen an den Schaufeln. Der Soll-Zustand umfasst hierbei beispielsweise eine entsprechende einsatztaugliche Schaufel, deren Schichtabplatzungen und Verzunderungen ein Ausmaß aufweisen, mit dem noch ein sicherer Einsatz der Schaufel über eine hinreichend lange Betriebsdauer gewährleistet werden kann. Insbesondere kann der Soll-Zustand Informationen über die Gestalt, insbesondere die Länge noch unkritischer Risse umfassen, die zur Beurteilung des Ist-Zustands mit den gemessenen Rissen verglichen werden können.

Sind die Abweichungen von dem so vorgegebenen Soll-Zustand zu hoch bzw. nicht mehr tolerierbar, ist die Turbinenanlage zur Durchführung einer Gesamtinspektion herunterzufahren, bei der die Schaufeln und ggf. auch weitere Komponenten ausgetauscht bzw. überholt werden müssen.

Bei einer weiteren praktischen Weiterbildung des erfindungsgemäßen Verfahrens kann als Mittel zur Ermittlung der Materialbeschaffenheit anstelle der Thermographiemesseinrichtung eine Körperschallmesseinrichtung verwendet werden, mit der sich die obigen materiellen Ermüdungsmerkmale der Schaufeln, insbesondere Risse ermitteln und hinsichtlich ihres Ausmaßes durch eine Körperschallmessung quantifizieren lassen.

Bei weiteren Weiterbildungen des erfindungsgemäßen Verfahrens kann mittels Körperschallmesseinrichtungen und Thermographiemesseinrichtungen auch die Materialbeschaffenheit bzw. die Integrität von Brennkammerauskleidungen und Hitzeschilden, insbesondere keramischen Hitzeschilden und metallischen Hitzeschilden ermittelt werden und, wie oben ausgeführt, zur Beurteilung der Materialbeschaffenheit mit entsprechenden Soll-Zuständen verglichen werden. Die sowohl mit der Körperschallmesseinrichtung als auch mit der Thermographiemesseinrichtung erzielten Messergebnisse können erfindungsgemäß aufeinander abgestimmt bzw. miteinander kombiniert werden, um die jeweiligen Ist-Zustände der obigen Komponenten mit größtmöglicher Genauigkeit zu ermitteln und durch anschließenden Vergleich mit entsprechenden Soll-Zuständen eine aussagekräftige Beurteilung der Ist-Zustände zu ermöglichen, die unter Umständen eine Gesamtinspektion der Turbinenanlage erforderlich machen.

Gemäß einer weiteren Weiterbildung des erfindungsgemäßen Verfahrens ist eine der Komponenten der Turbinenanlage eine relativ zur Ausströmung verstellbare Leitschaufel des Verdichters, der zu ermittelnde Ist-Zustand die Winkelstellung der Leitschaufel relativ zur Einströmrichtung ist, und das Mittel eine Bildaufnahmevorrichtung, insbesondere eine Kamera, wobei zur Ermittlung der Winkelstellung mittels der Bildaufnahmevorrichtung Bildaufnahmen der Leitschaufel vorgenommen werden.

Die einstellbare Winkelstellung von Leitschaufeln, insbesondere von Leitschaufeln in Verdichtern kann sich durch mechanische oder thermische Belastungen unter Umständen verstellen, was sich negativ auf den Wirkungsgrad der Turbine auswirken kann. Mittels des erfindungsgemäßen Verfahrens kann der Ist-Zustand, gekennzeichnet durch die Winkelstellung der Leitschaufeln relativ zur Einströmrichtung, unter Verwendung einer Bildaufnahmevorrichtung, insbesondere einer Kamera, ermittelt werden und unmittelbar mit entsprechenden Vorgaben für günstige Winkelstellungen, die den Soll-Zustand umfassen, verglichen werden.

Die Erfindung betrifft ferner ein Inspektionssystem für eine Turbinenanlage zur Durchführung des erfindungsgemäßen Verfahrens, mit wenigstens einem Mittel, das dafür vorgesehen ist, einen Ist-Zustand wenigstens einer ausgewählten Komponente der Turbinenanlage zu ermitteln, und wenigstens einer Auswerteeinheit, die dazu ausgebildet ist, den von dem wenigstens einen Mittel ermittelten Ist-Zustand zu empfangen, auszuwerten und mit wenigstens einem vorgegebenen Soll-Zustand zu vergleichen, wobei die Auswerteeinheit bei einer bevorzugten Ausführungsform ferner dazu ausgebildet ist, auf Basis des Vergleichs zwischen dem ermittelten Ist-Zustand und Soll-Zustand abzuleiten, ob eine Gesamtinspektion der Turbine erforderlich ist.
Vorzugsweise werden mehrere unterschiedliche Komponenten gleichzeitig überwacht.

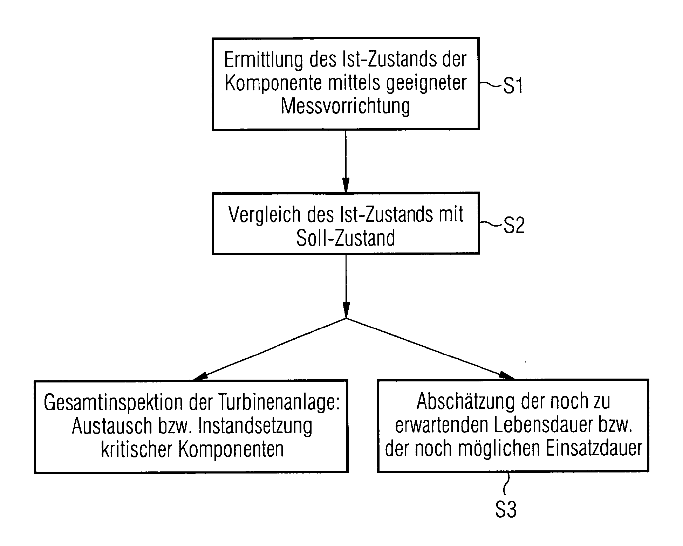

Nachfolgend wird das erfindungsgemäße Verfahren mittels des in der Figur dargestellten schematischen Blockdiagramms näher erläutert.

Wie in der Figur gezeigt, wird gemäß dem erfindungsgemäßen Verfahren zunächst der Ist-Zustand der jeweiligen Komponente der Turbinenanlage mittels einer geeigneten Messvorrichtung ermittelt (vgl. Schritt S1). Anschließend wird der ermittelte Ist-Zustand mit einem vorgegebenen Soll-Zustand verglichen (vgl. Schritt S2). Im nächsten Schritt (vgl. Schritt S3) wird auf Basis des Vergleichs entschieden, ob eine Gesamtinspektion der Turbinenanlage erforderlich ist, bei der die Turbinenanlage heruntergefahren wird und entsprechende Komponenten ausgetauscht bzw. wieder instand gesetzt werden. Wenn nicht, erfolgt eine Abschätzung für die noch zu erwartende Lebensdauer, beispielsweise mittels eines Rissausbreitungsmodells, bzw. eine Abschätzung für die noch mögliche Einsatzdauer.

## Patentansprüche

1. Verfahren zur Inspektion einer Turbinenanlage, insbesondere einer Gasturbinenanlage oder Dampfturbinenanlage,
bei dem ein Ist-Zustand einer Komponente der Turbinenanlage mit Hilfe eines geeigneten Mittels ermittelt wird,
der ermittelte Ist-Zustand mit einem vorgegebenen Soll-Zustand der Komponente verglichen wird,
und auf Basis des Vergleichs zwischen dem Ist-Zustand und dem Soll-Zustand abgeleitet wird, ob eine Gesamtinspektion der Turbinenanlage erforderlich ist.

2. Verfahren nach Anspruch 1,
bei dem die Komponente ein Filter ist,
der zu ermittelnde Ist-Zustand der Verschmutzungszustand des Filters ist,
und als das Mittel eine Druckmesseinrichtung verwendet wird,
wobei zur Ermittlung des Verschmutzungszustands des Filters der Druckabfall über dem Filter,
welcher sich bei Durchströmung des Filters einstellt, mittels der Druckmesseinrichtung gemessen wird.

3. Verfahren nach Anspruch 1,
bei dem die Komponente eine Schaufel ist,
der zu ermittelnde Ist-Zustand die Materialbeschaffenheit der Schaufel ist,
und als das Mittel eine Thermographiemesseinrichtung verwendet wird,
wobei zur Ermittlung der Materialbeschaffenheit an der Schaufel eine Thermographiemessung vorgenommen wird, die unter Verwendung der Thermographiemesseinrichtung durchgeführt wird.

4. Verfahren nach Anspruch 3,
bei dem als Mittel eine Körperschallmesseinrichtung ist, wobei zur Ermittlung der Materialbeschaffenheit an der Schaufel eine Körperschallmessung vorgenommen wird, die unter Verwendung der Körperschallmesseinrichtung durchgeführt wird.

5. Verfahren nach Anspruch 1,
bei dem die Komponente eine Leitschaufel ist,
der zu ermittelnde Ist-Zustand die Winkelstellung der Leitschaufel relativ zur Einströmrichtung ist,
und als das Mittel eine Bildaufnahmevorrichtung, insbesondere eine Kamera, verwendet wird,
wobei zur Ermittlung der Winkelstellung mittels der Bildaufnahmevorrichtung Bildaufnahmen der Leitschaufel vorgenommen werden.

6. Verfahren nach Anspruch 1,
bei dem die Komponente eine Brennkammerauskleidung ist,
der zu ermittelnde Ist-Zustand die Materialbeschaffenheit der Brennkammerauskleidung ist,
und als das Mittel eine Thermographiemesseinrichtung verwendet wird,
wobei zur Ermittlung der Materialbeschaffenheit an der Brennkammerauskleidung eine Thermographiemessung vorgenommen wird,
die unter Verwendung der Thermographiemesseinrichtung durchgeführt wird.

7. Verfahren nach Anspruch 6,
bei dem das Mittel eine Körperschallmesseinrichtung verwendet wird,
wobei zur Ermittlung der Materialbeschaffenheit an der Brennkammerauskleidung eine Körperschallmessung vorgenommen wird,
die unter Verwendung der Körperschallmesseinrichtung durchgeführt wird.

8. Verfahren nach Anspruch 1,
bei dem die Komponente ein Hitzeschild ist,
der zu ermittelnde Ist-Zustand die Materialbeschaffenheit des Hitzeschilds ist,
und als das Mittel eine Thermographiemesseinrichtung verwendet wird,
wobei zur Ermittlung der Materialbeschaffenheit an dem Hitzeschild eine Thermographiemessung vorgenommen wird,
die unter Verwendung der Thermographiemesseinrichtung durchgeführt wird.

9. Verfahren nach Anspruch 8,
bei dem als Mittel eine Körperschallmesseinrichtung verwendet wird,
wobei zur Ermittlung der Materialbeschaffenheit an dem Hitzeschild eine Körperschallmessung vorgenommen wird,
die unter Verwendung der Körperschallmesseinrichtung durchgeführt wird.

10. Inspektionssystem für eine Turbinenanlage zur Durchführung eines Verfahrens nach einem der Ansprüche 1 bis 9,
mit wenigstens einem Mittel, das dafür vorgesehen ist, einen Ist-Zustand wenigstens einer ausgewählten Komponente der Turbinenanlage zu ermitteln,
und wenigstens einer Auswerteeinheit, die dazu ausgebildet ist, den von dem wenigstens einen Mittel ermittelten Ist-Zustand zu empfangen, auszuwerten und mit wenigstens einem vorgegebenen Soll-Zustand zu vergleichen.

11. Inspektionssystem nach Anspruch 10,
bei dem die Auswerteinheit ferner dazu ausgebildet ist, auf Basis des Vergleichs zwischen dem ermittelten Ist-Zustand und Soll-Zustand abzuleiten, ob eine Gesamtinspektion der Turbine erforderlich ist.
